# EUROPÄISCHE PATENTSCHRIFT

(11) **EP 2 844 786 B1**
(45) Veröffentlichungstag und Bekanntmachung des Hinweises auf die Patenterteilung: **24.08.2016**
(21) Anmeldenummer: 13724549.4
(22) Anmeldetag: 14.05.2013
(51) Int. Cl.: C25B 15/00, H01M 8/04701, H01M 10/48, H01M 10/63, H01M 8/0432, H01M 8/04007, C25B 15/02, H01M 12/00

(54) **TEMPERATURREGELSYSTEM FÜR EINE HOCHTEMPERATUR-BATTERIE BZW. EINEN HOCHTEMPERATUR-ELEKTROLYSEUR**
TEMPERATURE CONTROL SYSTEM FOR A HIGH-TEMPERATURE BATTERY OR A HIGH-TEMPERATURE ELECTROLYZER
SYSTÈME DE RÉGULATION DE TEMPÉRATURE POUR BATTERIE OU ÉLECTROLYSEUR À HAUTE TEMPÉRATURE

(30) Priorität: 11.06.2012 DE 102012209698
(43) Veröffentlichungstag der Anmeldung: 11.03.2015
(73) Patentinhaber: Siemens Aktiengesellschaft, 80333 München (DE)
(72) Erfinder: LENK, Uwe, 08064 Zwickau (DE); TREMEL, Alexander, 91052 Erlangen (DE)
(86) Internationale Anmeldenummer: PCT/EP2013/059900
(87) Internationale Veröffentlichungsnummer: WO 2013/185994

(56) Entgegenhaltungen:
- JP-A- 2008 218 236
- JP-A- 2008 311 140
- US-A- 3 917 520
- US-A1- 2004 013 913
- US-A1- 2007 000 789
- US-A1- 2011 220 516

## Beschreibung

Die vorliegende Erfindung betrifft ein Regelsystem zur Temperaturregelung einer mit Heißluft über ein Leitungssystem versorgten Hochtemperatur-Batterie bzw. eines mit Heißluft über ein Leitungssystem versorgten Hochtemperatur-Elektrolyseurs.

Eine Hochtemperatur-Batterie, wie auch ein Hochtemperatur-Elektrolyseur müssen zur Bereitstellung einer geeigneten Betriebstemperatur mit ausreichend Wärme versorgt werden. So ist bspw. bei einer Hochtemperaturbatterie wie in der DE 10 2009 057 720.3 beschrieben, eine Erwärmung der Batteriezelle bis auf ein Temperaturniveau von wenigstens 700 °C notwendig, um einen effizienten Betrieb gewährleisten zu können. Gleichermaßen sind auch Hochtemperatur-Elektrolyseure, wie bspw. in der EP12163588 beschrieben, mit Wärme zu versorgen, um eine effiziente elektrochemische Gaszerlegung betreiben zu können. Die Effizienz beider Vorrichtungen wird maßgeblich durch die Betriebstemperatur beeinflusst, die beispielsweise die notwendigen Ionenflüsse in den Vorrichtungen bestimmt.

Die erforderliche Wärme wird hierbei wenigstens teilweise durch einen Strom an Heißluft bereit gestellt, welcher der Hochtemperatur-Batterie, bzw. dem Hochtemperatur-Elektrolyseur zugeführt wird. Das Temperaturniveau dieser Heißluft muss jedoch nicht das Betriebtemperaturniveau der Hochtemperatur-Batterie, bzw. des Hochtemperatur-Elektrolyseur erreichen, sollte jedoch ausreichend hoch sein, um einen wesentlichen Wärmebeitrag leisten zu können. Als Heißluft soll vorliegend also thermisch konditionierte Luft verstanden werden, deren Temperaturniveau über dem Umgebungstemperaturniveau liegt.

Im Rahmen der vorliegenden Erfindung soll eine Hochtemperatur-Batterie wie auch ein Hochtemperatur-Elektrolyseur eine Betriebstemperatur von wenigstens 300 °C, bevorzugt von wenigstens 650 °C aufweisen. Insbesondere sollen die Temperaturen ausreichend hoch sein, um eine Hochtemperatur-Batterie oder einen Hochtemperatur-Elektrolyseur bestimmungsgemäß betreiben zu können, die wenigstens teilweise auf der Basis einer Festelektrolyt-Brennstoffzelle (SOFC) arbeiten. Hierbei sind typischerweise Temperaturen von wenigstens 650 °C erforderlich.

Vergleichbare Betriebsvoraussetzungen sind aus dem technischen Bereich der Hochtemperatur-Brennstoffzellen bekannt, die als Festelektrolyt-Brennstoffzelle (SOFC) ausgebildet sind. So wird bspw. in der US 2004/0013913 A1 beschrieben, dass eine solche Hochtemperatur-Brennstoffzelle mittels eines Luftleitungssystems mit erwärmter Luft versorgt wird. Die Erwärmung erfolgt hierbei so, dass die der Hochtemperatur-Brennstoffzelle zugeführte Luft mittels eines Wärmetauschers und einer geeigneten Heizvorrichtung konditioniert wird. Die vom Wärmetauscher an die Luft abgegebene Energie wird teilweise einer Rückflussleitung entnommen, welche verbrauchte Luft aus der Hochtemperatur-Brennstoffzelle ab- und dem Wärmetauscher zuführt. Je nach der aus der Hochtemperatur-Brennstoffzelle abgeführten Menge an warmer Luft kann somit mittels des Wärmetauschers mehr oder weniger Wärme in einer thermischen Rezirkulationsschaltung der Hochtemperatur-Brennstoffzelle erneut zugeführt werden, wodurch der Gesamtwärmeverlust gering gehalten werden kann. Zudem kann mit erhöhter Rezirkulation der Temperaturgradient über die Brennstoffzelle vermindert werden. Die Regelung der Gesamtmenge an dem Luftstrom zugeführter thermischer Energie wird von einem Regelsystem übernommen, welches den zusätzlichen externen Wärmeeintrag bestimmt, um letztendlich die Hochtemperatur-Brennstoffzelle mit ausreichend Gesamtwärme versorgen zu können.

Da jedoch, anders als bei einer Hochtemperatur-Brennstoffzelle, der Betrieb einer Hochtemperaturbatterie bzw. eines Hochtemperatur-Elektrolyseurs typischerweise unter verschiedenen, und sich zeitlich veränderlichen Last- und Arbeitszuständen erfolgt, ist eine zeitlich variierende Versorgung der Hochtemperatur-Batterien bzw. der Hochtemperatur-Elektrolyseure mit thermischer Wärme notwendig. Typischerweise verläuft ein elektrische Energie aufnehmender Prozessschritt bei einem Hochtemperatur-Elektrolyseur endotherm, was eine Zufuhr von Wärme erforderlich macht. Im Gegensatz dazu verläuft ein chemische Energie abgebender Prozessschritt typischerweise exotherm. Erfolgt der Betrieb eines Hochtemperatur-Elektrolyseurs nun derart, dass beide Arten des Betriebs abwechselnd vorgenommen werden, ist eine variierende Versorgung mit Wärme erforderlich. Ebenso kann eine Hochtemperatur-Batterie in zwei unterschiedlichen Arbeitszuständen betrieben werden, einem elektrische Energie aufnehmenden und endothermen Ladezustand sowie einen elektrische Energie abgebenden und exothermen Entladezustand. Demgemäß ist auch hier eine variierende Versorgung mit Wärme erforderlich, falls beide Arbeitszustände abwechselnd zueinander gewählt werden.

Ferner können Hochtemperaturbatterien bzw. Hochtemperatur-Elektrolyseure zur Aufnahme von Überschussenergie aus erneuerbaren, fluktuierenden Energiequellen (Windenergie, Solarenergie) vorgesehen sein. Dies führt zu einer andauernden Veränderung der aufzunehmenden Leistung und damit auch zu Veränderungen in ihrem Arbeitszustand.

Verschiedene Arbeitszustände erfordern aber typischerweise auch voneinander unterschiedliche Massenströme in der Luftversorgung. Damit unterscheidet sich der Betrieb einer Hochtemperaturbatterie bzw. eines Hochtemperatur-Elektrolyseurs jedoch grundsätzlich von dem einer Hochtemperatur-Brennstoffzelle, die typischerweise lediglich einen einzigen definierten Arbeitszustand hat.

Wenn eine Hochtemperatur-Batterie bzw. ein Hochtemperatur-Elektrolyseur mit sich zeitlich verändernden Massenströmen an Luft versorgt werden muss, zeigt sich, dass die thermische Konditionierung, wie in der US 2004/0013913 A1 beschrieben, nicht ausreichend effizient betrieben werden kann. Unter solchen Umständen kann nämlich ein hoher thermischer Wärmeeintrag in den Luftstrom erforderlich werden, welcher nur durch Bereitstellung von großen Mengen an thermischer Energie durch eine externe Wärmequelle gedeckt werden kann. Die ausschließlich thermische Einkopplung von Wärme aus der Rückflussleitung erweist sich hierbei als energetisch nicht ausreichend vorteilhaft. Zudem kann sich die Regelgeschwindigkeit als nicht ausreichend für die schnelle Erwärmung großer Luftströme erweisen.
Folglich ist es technisch erforderlich, ein Regelsystem zur Temperaturregelung einer mit Heißluft über ein Leitungssystem versorgten Hochtemperatur-Batterie bzw. eines mit Heißluft über ein Luftleitungssystem versorgten Hochtemperatur-Elektrolyseurs vorzuschlagen, welches die Nachteile aus dem Stand der Technik vermeidet. Insbesondere soll ein energieeffizienter Betrieb auch bei variierenden Massenströmen in der Luftversorgung ermöglicht werden. Weiterhin soll die Versorgung einer Hochtemperatur-Batterie bzw. eines Hochtemperatur-Elektrolyseurs mit einem zeitlich variierenden Massenstrom ermöglicht werden, wobei die Wärmekonditionierung dieses Massenstroms verhältnismäßig energieeffizient erfolgt.

Diese der vorliegenden Erfindung zugrundeliegenden Aufgaben werden durch ein Regelsystem gemäß Anspruch 1 gelöst.

Insbesondere werden diese der vorliegenden Erfindung zugrundeliegenden Aufgaben durch ein Regelsystem zur Temperaturregelung einer mit Heißluft über ein Luftleitungssystem versorgten Hochtemperaturbatterie bzw. eines mit Heißluft über ein Luftleitungssystem versorgten Hochtemperaturelektrolyseurs gelöst, welches wenigstens zwei Temperatursonden aufweist, die dazu ausgebildet sind, die Temperatur an zwei unterschiedlichen Orten des Luftleitungssystems zu erfassen, sowie wenigstens eine in Bezug auf die Hochtemperaturbatterie bzw. auf den Hochtemperaturelektrolyseur stromaufwärts in das Luftleitungssystem verschaltete erste Konditioniereinheit zur physikalischen Konditionierung der Luft, sowie eine Rückführleitung, welche aus der Hochtemperaturbatterie bzw. aus dem Hochtemperaturelektrolyseur ausgetretene Heißluft zu einem Ort des Luftleitungssystems zurückführt und in dieses wieder einspeist, welcher Ort stromaufwärts in Bezug auf die Hochtemperaturbatterie bzw. auf den Hochtemperaturelektrolyseur angeordnet ist, wobei das Regelsystem die erste Konditioniereinheit in Abhängigkeit der durch die Temperatursonden erfassten Temperaturen regelt.

An dieser Stelle sei angemerkt, dass erfindungsgemäß das Luftleitungssystem sowohl alle Bereiche der Luftzuleitung wie auch Luftableitung umfasst. Weiter umfasst das Luftleitungssystem die für die Heißluftleitung geeigneten Bereiche innerhalb der Hochtemperatur-Batterie bzw. innerhalb des Hochtemperatur-Elektrolyseurs.

Das erfindungsgemäße Regelsystem gemäß Anspruch 1 ist folglich so ausgebildet, dass wenigstens ein Teil der aus der Hochtemperatur-Batterie bzw. dem Hochtemperatur-Elektrolyseur austretenden Heißluft in das Luftleitungssystem zurückgeführt und wieder eingespeist wird, wobei die Einspeisung an einem Ort erfolgt, der in Bezug auf die Hochtemperatur-Batterie bzw. auf den Hochtemperatur-Elektrolyseur stromaufwärts angeordnet ist. Folglich wird nicht nur thermische Energie an den die Hochtemperatur-Batterie bzw. den Hochtemperatur-Elektrolyseur versorgenden Luftstrom abgegeben, sondern temperaturkonditionierte Heißluft. Damit wird der Luftstrom nicht nur hinsichtlich seines Wärmeinhalts sondern auch hinsichtlich seines Massenstroms verändert.

Gleichzeitig kann der Luftstrom auch noch hinsichtlich seiner chemischen Zusammensetzung verändert werden, da die aus der Hochtemperatur-Batterie bzw. aus dem Hochtemperatur-Elektrolyseur austretende Heißluft hinsichtlich ihrer Zusammensetzung, also der einzelnen Partialdrücke, verändert sein kann. So ist es beispielsweise möglich, dass aus einer Hochtemperatur-Batterie bzw. aus einem Hochtemperatur-Elektrolyseur austretende Heißluft vermehrt bzw. mitunter auch vermindert Sauerstoff aufweist. Durch Mischung der rezirkulierten Heißluft etwa mit Frischluft kann folglich der Sauerstoffgehalt in der der Hochtemperatur-Batterie bzw. dem Hochtemperatur-Elektrolyseur erneut zugeführten Luft eingestellt werden. Damit kann jedoch auch die Effizienz der elektrochemischen Vorgänge in der Hochtemperatur-Batterie bzw. in dem Hochtemperatur-Elektrolyseur beeinflusst werden, da diese konzentrationsabhängig sind.

Weiter sieht das erfindungsgemäße Regelsystem vor, dass wenigstens eine Konditioniereinheit vorhanden ist, die in Abhängigkeit der durch die Temperatursonden erfassten Temperaturen geregelt wird. Die Konditioniereinheit kann hierbei geeignet sein, den Luftstrom lediglich hinsichtlich seines Wärmeinhalts bzw. auch hinsichtlich seines Massenstroms zu konditionieren. Ebenso ist auch eine gleichzeitige Konditionierung von thermischem Wärmeinhalt wie auch Massenstrom denkbar. Die Temperatursonden erfassen hierbei die Temperatur der Luft an unterschiedlichen Orten des Luftleitungssystems so dass bei Vergleich beider Temperaturen eine geeignete Betriebsänderung der Konditioniereinheit vorgenommen werden kann. Die Betriebsänderung wird folglich als Reaktion eines erfassten Temperaturunterschiedes durch das Regelsystem veranlasst.

Wird die Hochtemperatur-Batterie nun bspw. in einem Ladezustand betrieben, erfordert dies typischerweise eine verstärkte Versorgung mit Luft eines hohen Temperaturniveaus, um den Ladezustand überhaupt erst zu ermöglichen. Aufgrund des thermischen Energieverbrauchs in der Hochtemperatur-Batterie weist der aus der Hochtemperatur-Batterie austretende Heißluftstrom folglich ein relativ geringeres Temperaturniveau auf als der in die Hochtemperatur-Batterie eintretende Luftstrom. Anders verhält es sich jedoch während eines Entladezustandes, während dessen die Hochtemperatur-Batterie selbst thermische Wärme erzeugt und diese auf den Luftstrom überträgt, wobei mit dem Heißluftstrom die Wärme aus der Hochtemperatur-Batterie abgeführt wird.

Die Versorgung der Hochtemperatur-Batterie während eines Entladezustandes erfordert einen geringen Wärmeeintrag mit dem versorgenden Luftstrom. Wird aber die Hochtemperatur-Batterie von einem Entladezustand in einen Ladezustand überführt, kann weiterhin die in der Hochtemperatur-Batterie vorhandene Wärme geeignet mit dem Heißluftstrom aus dieser ab- und erneut dem Luftleitungssystem nach erfolgter Einspeisung zugeführt werden. Hierbei ist mitunter eine Änderung des Luftmassenstroms erforderlich.

Erfindungsgemäß kann nun in der Anfangsphase des Ladezustandes der Luftstrom sowohl thermisch als auch hinsichtlich des Massenstroms durch die aus der Hochtemperatur-Batterie abgeführte Heißluft vorteilhaft konditioniert werden. Hierbei verringert sich im Laufe des Ladezustandes, die mit der dem Heißluftstrom aus der Hochtemperatur-Batterie abgeführte Wärmemenge zunehmend. In dem Maße, in welchem sich die diese Wärmemenge verringert, kann dem der Hochtemperatur-Batterie zugeführten Heißluftstrom durch einen veränderlichen Wärmeeintrag thermisch konditioniert werden. Gleichzeitig kann aber auch eine Konditionierung des Massenstroms erfolgen, falls die notwendig ist.

Wie eine Hochtemperatur-Batterie bei unterschiedlichen Arbeitszuständen mit einem Luftstrom unterschiedlichen thermischen Wärmeinhalts wie auch unterschiedlichen Massenstroms versorgt werden muss, so ist auch ein Hochtemperatur-Elektrolyseur mitunter bei unterschiedlichen Betriebszuständen mit unterschiedlichen Mengen an Wärme bzw. mit einem unterschiedlichen Massenstrom an Luft zu versorgen.

So kann bspw. wie in der weiter oben beschriebenen, aus dem Stande der Technik bekannten Ausführungsform eines Hochtemperatur-Elektrolyseurs ein solcher in verschiedenen Arbeitszuständen betrieben werden. Hierbei kann ein Arbeitszustand eine relativ verstärkte Versorgung mit thermischer Energie wie auch einen angepassten und veränderten Massenstrom erfordern.

Vor allem aber bei solchen Übergangszuständen, also bei einem sich ändernden Arbeitszustand, ist typischerweise eine Veränderung hinsichtlich des Temperaturniveaus und des Massenstroms notwendig. Um folglich eine effiziente thermische Konditionierung des Luftstroms bei auch gleichzeitig vorteilhafter Konditionierung des Massenstroms zu erreichen, kann das erfindungsgemäße Regelsystem vorteilhaft eingesetzt werden.

Gemäß einer vorteilhaften Ausführungsform der Erfindung kann vorgesehen sein, dass eine Regelung der ersten Konditioniereinheit auch in Abhängigkeit des erfassten Temperaturunterschieds geregelt werden kann. Hierbei ist es also möglich, dass das Regelsystem nicht zwei unterschiedliche Temperaturwerte als Regelgrößen verarbeitet, sondern dass dieses lediglich eine Regelgröße, nämlich den Temperaturunterschied zur Systemregelung zur Systemregelung heranziehen. Der Temperaturunterschied kann hierbei vorteilhaft durch eine elektronische Vergleichsschaltung ermöglicht sein.

Gemäß einer weiteren vorteilhaften Ausführungsform ist vorgesehen, dass das Regelsystem eine in die Rückführleitung verschaltete zweite Konditioniereinheit aufweist, die als Strömungsgenerator ausgebildet ist, und die dazu geeignet ist, die sich in der Rückführleitung befindliche Heißluft mit einer Strömung zu beaufschlagen, wobei das Regelsystem diese zweite Konditioniereinheit auch in Abhängigkeit der durch die Temperatursonden erfassten Temperaturen regelt. Die in die Rückführleitung verschaltete zweite Konditioniereinheit ermöglicht eine gleichzeitige Rückführung von thermischer Energie wie auch eine Änderung des Massenstroms. Demgemäß kann vor allem dann bei sich verändernden Anforderungen an den thermischen Wärmeinhalt des Luftstroms wie auch an den Massenstrom durch eine geeignete Einstellung der zweiten Konditioniereinheit zielgerichtet reagiert werden. Soll etwa der Hochtemperatur-Batterie bzw. dem Hochtemperatur-Elektrolyseur ein höherer Massenstrom bei gleichzeitig erhöhter Wärmemenge zugeführt werden, kann dies durch einen erhöhten Heißluftstrom in der Rückführleitung erreicht werden.

Entsprechend einer Ausführungsform kann die zweite Konditioniereinheit als Injektor und/oder Ejektor, insbesondere als Gasstrahlpumpe, oder gemäß einer anderen Ausführungsform als Verdichterpumpe ausgeführt sein. Weiter ist es auch möglich, dass diese zweite Konditioniereinheit nicht in Abhängigkeit der einzeln erfassten Temperaturwerte geregelt wird, sondern aufgrund eines Temperaturunterschiedwertes.

Entsprechend einer Weiterführung dieser Ausführungsform kann auch vorgesehen sein, dass die Rückführleitung geeignete Stelleinrichtungen aufweist, die eine gezielte Veränderung des Massenstroms in der Rückführleitung ermöglichen. Solche Stelleinrichtungen können bspw. als Ventile ausgeführt sein.

Gemäß einer weiteren vorteilhaften Ausführungsform der Erfindung ist vorgesehen, dass eine erste Temperatursonde an dem Luftleitungssystem an einem ersten Ort stromaufwärts vor der Hochtemperatur-Batterie bzw. vor dem Hochtemperatur-Elektrolyseur vorgesehen ist, und eine andere zweite Temperatursonde an dem Luftleitungssystem an einem zweiten Ort stromabwärts nach der Hochtemperatur-Batterie bzw. nach dem Hochtemperatur-Elektrolyseur. Das Regelsystem erlaubt folglich aufgrund des sich zwischen den Messpunkten einstellenden Temperaturfeldes eine geeignete Regelung der stromaufwärts vorgesehenen Konditioniereinheiten. Ebenso ist auch eine in der Rückführleitung verschaltete Konditioniereinheit geeignet regelbar. Die Messung der Temperaturen vor und nach der Hochtemperatur-Batterie bzw. Hochtemperatur-Elektrolyseur erfordert hierbei keine weiteren Kenntnisse der Temperaturverteilung in der Hochtemperatur-Batterie bzw. dem Hochtemperatur-Elektrolyseur und stellt folglich eine besonders einfache Regelung dar.

Anders verhält es sich bei einer weiteren Ausführungsform, welche eine erste Temperatursonde an dem Luftleitungssystem an einem ersten Ort stromaufwärts vor der Hochtemperatur-Batterie bzw. vor dem Hochtemperatur-Elektrolyseur vorsieht, und eine andere zweite Temperatursonde in der Hochtemperatur-Batterie bzw. in dem Hochtemperatur-Elektrolyseur. Zwar erfordert die Regelung aufgrund von in der Hochtemperatur-Batterie bzw. in dem Hochtemperatur-Elektrolyseur erfassten Temperaturen eine weitergehende Kenntnis der Vorgänge in diesen Vorrichtungen, so kann jedoch mitunter aufgrund dieser Kenntnis eine gezielte bzw. zeitlich schnellere Regelung der Konditioniereinheiten erfolgen. Insbesondere kann damit den sich verändernden Temperaturverhältnissen in der Hochtemperatur-Batterie bzw. in dem Hochtemperatur-Elektrolyseur während einer Betriebsänderung verbessert Rechnung getragen werden.

Gemäß einer weiteren Ausführungsform der Erfindung ist vorgesehen, dass wenigstens drei Temperatursonden vorgesehen sind, wobei eine erste Temperatursonde an dem Luftleitungssystem an einem ersten Ort stromaufwärts vor der Hochtemperatur-Batterie bzw. vor dem Hochtemperatur-Elektrolyseur vorgesehen ist, eine zweite Temperatursonde an dem Luftleitungssystem an einem zweiten Ort stromabwärts nach der Hochtemperatur-Batterie bzw. nach dem Hochtemperatur-Elektrolyseur vorgesehen ist und eine dritte Temperatursonde in der Hochtemperatur-Batterie bzw. in dem Hochtemperatur-Elektrolyseur. Folglich stehen dem Regelsystem wenigstens drei Temperaturwerte zur Verfügung, die eine vorteilhafte und auf den Betriebszustand geeignet abgestimmte Regelung der Konditioniereinheiten ermöglicht. Insbesondere bei sich ändernden Betriebszuständen kann die Kenntnis von verschiedenen Temperaturwerten des Luftleitungssystems eine detaillierte Kenntnis der ablaufenden Vorgänge ermöglichen, wodurch eine vorteilhafte Regelung der Konditioniereinheiten ermöglicht wird.

Entsprechend einer weiteren Ausführungsform der Erfindung ist die erste Konditioniereinheit als Heizvorrichtung ausgebildet, die dazu geeignet ist, die der in dem Luftverteilungssystem befindlichen Heißluft Wärme zuzuführen. Je nach Regelungszustand gibt die Heizvorrichtung mehr oder weniger Wärme an den in dem Luftleitungssystem befindlichen Luftstrom ab.

Gemäß einer weiteren Ausführungsform kann die erste Konditioniereinheit auch als Strömungsgenerator ausgebildet sein, der dazu ausgebildet ist, die sich in dem Luftleitungssystem befindliche Luft mit einer Strömung zu beaufschlagen. Die Beaufschlagung der Strömung erfolgt insbesondere variabel. So kann bspw. bei Nachfrage einer Erhöhung des Massenstroms der Strömungsgenerator derart geregelt werden, dass der Luftstrom mit einer verstärkten Strömung beaufschlagt wird. Es ist hierbei auch darauf hinzuweisen, dass bei Beaufschlagung der Strömung die Luft keine thermische Konditionierung erfahren muss. So ist es ausführungsgemäß auch ausreichend, Frischluft mit einer Strömung zu beaufschlagen, die in das Luftleitungssystem eingeleitet und erst nachfolgend thermisch konditioniert wird.

Mittels des Strömungsgenerators kann auch in vorteilhafter Weise der Gehalt an Sauerstoff in der in dem Luftleitungssystem befindlichen Luft eingestellt werden. So kann etwa die Menge bzw. der Anteil an Frischluft im Vergleich zu rezirkulierter Heißluft beeinflusst werden. Da nämlich mitunter die aus einer Hochtemperatur-Batterie bzw. aus einem Hochtemperatur-Elektrolyseur austretende Heißluft vermehrt bzw. mitunter auch vermindert Sauerstoff aufweist, kann durch Mischung der rezirkulierten Heißluft mit Frischluft der Sauerstoffgehalt in der der Hochtemperatur-Batterie bzw. dem Hochtemperatur-Elektrolyseur erneut zugeführten Luft eingestellt werden. Damit kann jedoch auch die Effizienz der elektrochemischen Vorgänge in der Hochtemperatur-Batterie bzw. in dem Hochtemperatur-Elektrolyseur beeinflusst werden. Beispielsweise kann in einem Entladezustand einer Hochtemperatur-Batterie ein höherer Sauerstoffgehalt zu einer zeitlich schnelleren Entladung führen, wodurch etwa eine höhere Energiedicht zur Verfügung gestellt werden kann.

Entsprechend einer weiteren, überaus vorteilhaften Ausführungsform der Erfindung kann vorgesehen sein, dass das Regelsystem wenigstens zwei in Bezug auf die Hochtemperatur-Batterie bzw. auf den Hochtemperatur-Elektrolyseur stromaufwärts in das Luftleitungssystem verschaltete Konditioniereinheiten aufweist, wobei eine Konditioniereinheit als Heizvorrichtung ausgebildet ist, die dazu geeignet ist, der in dem Luftleitungssystem befindlichen Luft Wärme zuzuführen, und eine Konditioniereinheit als Strömungsgenerator ausgebildet ist, der dazu geeignet ist, die sich in dem Luftleitungssystem befindliche Luft mit einer Strömung zu beaufschlagen, wobei das Regelsystem die beiden Konditioniereinheiten in Abhängigkeit des durch die Temperatursonden erfassten Temperaturunterschiedes regelt. Alternativ kann auch eine Regelung aufgrund des durch die Temperatursonden erfassten Temperaturunterschieds erfolgen. Ausführungsgemäß erlaubt folglich das Regelsystem eine gleichzeitige Beeinflussung des Massenstroms in dem Luftleitungssystem wie auch eine davon getrennte Konditionierung des Wärmeinhalts der Heißluft. Folglich können beide physikalischen Parameter geeignet und verhältnismäßig unabhängig voneinander eingestellt werden. Demgemäß kann auf entsprechende Betriebsänderungen in der Hochtemperatur-Batterie bzw. in dem Hochtemperatur-Elektrolyseur verhältnismäßig schnell reagiert werden. Weiterhin ist es möglich, die Regelung von erster Konditioniereinheit und zweiter Konditioniereinheit energieoptimiert auszuführen. Hierbei können bspw. als weitere Steuergrößen der zeitliche Energieverbrauch von erster Konditioniereinheit und zweiter Konditioniereinheit zusätzlich zu den Regelgrößen der erfassten Temperaturwerte durch das Regelsystem berücksichtigt werden.

Gemäß einer Weiterführung dieser Ausführungsform kann vorgesehen sein, dass die zwei Konditioniereinheiten als ein Bauteil ausgebildet sind, und insbesondere in dem Bauteil eine Reihenschaltung aufweisen. Damit wird der Bauaufwand merklich vermindert.

Gemäß einer weiteren Ausführungsform der Erfindung ist vorgesehen, dass das Regelsystem weiterhin eine zweite Rückführleitung aufweist, welche aus der Hochtemperatur-Batterie bzw. aus dem Hochtemperatur-Elektrolyseur ausgetretene Heißluft zu einem Ort des Luftleitungssystems zurückführt, welcher Ort stromaufwärts in Bezug auf die Hochtemperatur-Batterie bzw. auf den Hochtemperatur-Elektrolyseur angeordnet ist. Die zweite Rückführleitung kann hierbei separat aus der Hochtemperatur-Batterie bzw. aus dem Hochtemperatur-Elektrolyseur ausgeführt werden, bzw. kann als Zweigleitung von der ersten Rückführleitung oder dem Luftleitungssystem abgeführt werden. Die zweite Rückführleitung kann ebenso wie die erste Rückführleitung an demselben Ort in das Luftleitungssystem münden und den darin geführten Luftstrom in das Luftleitungssystem einspeisen. Eine zweite Rückführleitung erlaubt hierbei eine hinsichtlich der Flexibilität bei Reaktion auf Betriebszustandsänderungen verbesserte Anordnung. Die Flexibilität ist insbesondere dann verbessert, wenn die zweite Rückführleitung an einem Ort in das Luftleitungssystem mündet, welcher nicht mit dem ersten Ort identisch ist, an welchen die erste Rückführleitung in das Luftleitungssystem mündet. Demgemäß können dem Luftleitungssystem an unterschiedlichen Orten unterschiedliche Mengen an thermischer Energie wie auch an Heißluft zugeführt werden.

Gemäß einer Weiterführung dieses Aspektes ist vorgesehen, dass die zweite Rückführleitung, die aus der Hochtemperatur-Batterie bzw. aus dem Hochtemperatur-Elektrolyseur austretende Heißluft zu einem Wärmetauscher führt, welcher dazu ausgebildet ist, den Luftstrom in dem Luftleitungssystem zu erwärmen, bevor er der Hochtemperatur-Batterie bzw. dem Hochtemperatur-Elektrolyseur zugeführt wird. Eine Konditionierung der in dem Luftleitungssystem befindlichen Heißluft kann folglich lediglich thermisch erfolgen, ohne auch gleichzeitig den Massenstrom der Heißluft in dem Luftleitungssystem mit zu beeinflussen. Dies wiederum erhöht die Flexibilität und Regelvielfalt bei unterschiedlichen Betriebsanforderungen.

Entsprechend einer Weiterführung dieser Ausführungsform ist vorgesehen, dass der Wärmetauscher in Bezug auf die erste Konditioniereinheit stromaufwärts in dem Luftleitungssystem verschaltet ist. Vor allem dann, wenn die erste Konditioniereinheit als Heizvorrichtung ausgeführt ist, kann so eine energetisch effiziente thermische Konditionierung der Luft in dem Luftleitungssystem erfolgen, da durch die erste Konditioniereinheit nur noch der Differenzbetrag der Wärme bereit gestellt werden muss, welchen der Wärmetauscher nicht zur Verfügung stellen kann.

Nachfolgend wird die Erfindung anhand einzelner Ausführungsformen im Detail beschrieben. Hierbei soll jedoch die Allgemeinheit der beanspruchten Erfindung nicht beeinträchtigt sein.

Weiterhin ist darauf hinzuweisen, dass die in den Figuren dargestellten Ausführungsformen lediglich schematisch zu verstehen sind, ohne damit jedoch eine mögliche Konkretisierung der Erfindung in Frage stellen zu können. Eine Konkretisierung kann der Fachmann anhand seines allgemeinen Fachwissens im Licht der vorliegenden Offenbarung vornehmen.

Hierbei zeigen:
- FIG 1: eine Ausführungsform eines Regelsystems, wie es vorliegend nicht beansprucht ist;
- FIG 2: eine erste Ausführungsform des erfindungsgemäßen Regelsystems in einer schematischen Schaltdarstellung;
- FIG 3: eine weitere Ausführungsform der Erfindung gemäß einer schematischen Schaltdarstellung;
- FIG 4: eine weitere Ausführungsform der Erfindung gemäß einer schematischen Schaltdarstellung.

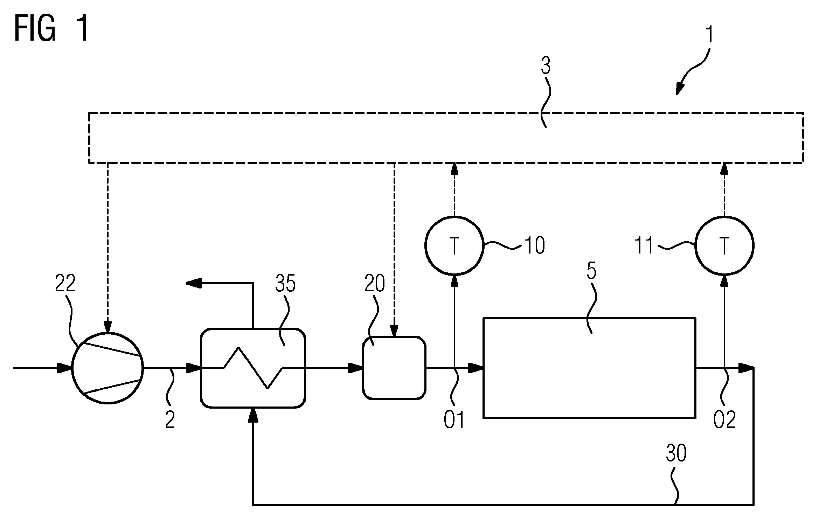

FIG 1 zeigt eine Ausführungsform eines vorliegend nicht beanspruchten Regelsystems 1. Hierbei umfasst das Regelsystem 1 ein Luftleitungssystem 2 zur Versorgung einer Hochtemperatur-Batterie 5 bzw. eines Hochtemperatur-Elektrolyseurs 5 mit Heißluft. Zur Konditionierung der in dem Luftleitungssystem 2 befindlichen Luft ist eine erste Konditioniereinheit 20, ein Wärmetauscher 35 wie auch eine dritte Konditioniereinheit 22 vorgesehen. Die erste Konditioniereinheit 20 ist hierbei als Heizvorrichtung ausgebildet, die in dem Luftleitungssystem 2 befindliche Luft thermisch konditioniert. In Bezug auf die erste Konditioniereinheit 20 stromaufwärts ist der Wärmetauscher 35 vorgesehen, welcher ebenfalls dazu ausgebildet ist, die in dem Luftleitungssystem 2 befindliche Luft thermisch zu konditionieren. Der Wärmetauscher 35 vermag thermische Energie aus einem aus der Hochtemperatur-Batterie 5 bzw. aus dem Hochtemperatur-Elektrolyseur 5 rückgeführten Heißluftstrom zu entnehmen, um diese auf den der Hochtemperatur-Batterie 5 bzw. dem der Hochtemperatur-Elektrolyseur 5 zugeführten Luftstrom zu übertragen. Hierbei erlaubt der Wärmetauscher 35 ausschließlich eine thermische Konditionierung, ohne den Massenstrom des in dem Luftleitungssystem 2 befindlichen Heißluftstroms zu verändern.

Weiterhin in Bezug auf den Wärmetauscher 35 stromaufwärts befindet sich eine dritte Konditioniereinheit 22 angeordnet, welche als Strömungsgenerator ausgebildet ist. Der Strömungsgenerator 22 vermag die in dem Luftleitungssystem befindliche Luft mit einer Strömung zu beaufschlagen und ermöglicht folglich eine Variation des Massenstroms. Um eine geeignete Konditionierung des Luftstroms in dem Luftleitungssystem 2 zu erreichen, regelt eine Regeleinheit 3 den Betriebszustand der ersten Konditioniereinheit 20 sowie der dritten Konditioniereinheit 22. Die Regelung erfolgt hierbei in Abhängigkeit der durch eine erste Temperatursonde 10 wie auch zweite Temperatursonde 11 erfassten Temperaturwerte. Die Erfassung der Temperaturwerte erfolgt entsprechend an einem ersten Ort O1 vor der Hochtemperatur-Batterie bzw. vor dem Hochtemperatur-Elektrolyseur 5 sowie an einem zweiten Ort 02 nach der Hochtemperaturbatterie bzw. nach dem Hochtemperatur-Elektrolyseur.

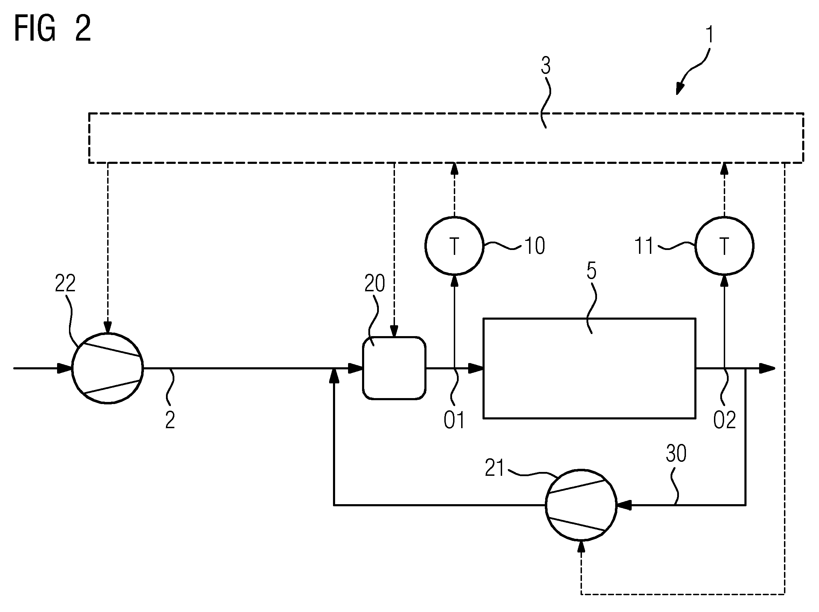

FIG 2 zeigt eine erste Ausführungsform eines erfindungsgemäßen Regelsystems 1, welches ebenso die Versorgung einer Hochtemperatur-Batterie 5 bzw. eines Hochtemperatur-Elektrolyseurs 5 mit Heißluft über ein Luftleitungssystem 2 ermöglicht. Im Vergleich zu der in FIG 1 gezeigten Ausführungsform wird jedoch die aus der Hochtemperatur-Batterie 5 bzw. dem Hochtemperatur-Elektrolyseur 5 austretende Heißluft nicht einem Wärmetauscher zur thermischen Konditionierung zurückgeführt, sondern wird nach ihrer Rückleitung in das Luftleitungssystem 2 vollständig in dieses eingespeist. Hierbei erfolgt eine Konditionierung sowohl des thermischen Wärmeinhalts als auch des Massenstroms des Luftstroms in dem Luftleitungssystem 2.

Die Rückführung erfolgt über eine erste Rückführleitung 30, die mit einer zweiten Konditioniereinheit 21 verschaltet ist. Die zweite Konditioniereinheit 21 ist als Strömungsgenerator ausgebildet, der die Flussmenge der zurück geführten Heißluft in der ersten Rückführleitung 30 bestimmt. Je nach Betriebszustand kann der Strömungsgenerator 21 eine größere bzw. auch kleinere Menge an Heißluft mittels der Rückführleitung 30 rezirkulieren. Damit kann die der Hochtemperatur-Batterie 5 bzw. dem Hochtemperatur-Elektrolyseur 5 zugeführte Menge an Heißluft zeitlich sowohl in Bezug auf die thermische Wärmemenge als auch auf den Massenstrom konditioniert werden. Nach erfolgter Rückführung der aus der Hochtemperatur-Batterie 5 bzw. dem Hochtemperatur-Elektrolyseur 5 austretenden Heißluft wird diese in dem Luftleitungssystem 2 mit weiterer Luft vermischt. Hierbei kann es sich bspw. um Frischluft aber auch um bereits konditionierte Luft handeln.

Um den der Hochtemperatur-Batterie 5 bzw. dem Hochtemperatur-Elektrolyseur 5 zugeführten Luftstrom zusätzlich noch thermisch konditionieren zu können, ist weiterhin eine erste Konditioniereinheit 20 vorgesehen, die den in dem Luftleitungssystem 2 befindlichen Luftstrom im Sinne einer Heizvorrichtung thermisch konditioniert.

Sowohl die erste Konditioniereinheit 20 wie auch die zweite Konditioniereinheit 21 und die dritte Konditioniereinheit 22 werden durch eine Regeleinheit 3 geschaltet, die wiederum als Regelgrößen die erfassten Temperaturwerte einer ersten Temperatursonde 10 und einer zweiten Temperatursonde 11 heranzieht. Mittels der ersten Temperatursonde 10 wird die Temperatur der Heißluft an einem ersten Ort O1 stromaufwärts in Bezug auf die Hochtemperatur-Batterie 5 bzw. dem Hochtemperatur-Elektrolyseur 5 gemessen. Die zweite Temperatursonde 11 ist dazu ausgebildet, die Temperatur an einem zweiten Ort 02 stromabwärts von der Hochtemperatur-Batterie 5 bzw. dem Hochtemperatur-Elektrolyseur 5 zu messen.

Aufgrund der geregelten Zurückführung von Heißluft aus der Hochtemperatur-Batterie 5 bzw. aus dem Hochtemperatur-Elektrolyseur 5 in das Luftleitungssystem 2 stromaufwärts in Bezug auf die Hochtemperatur-Batterie 5 bzw. auf den Hochtemperatur-Elektrolyseur 5 kann eine energetisch effiziente wie auch hinsichtlich der Anforderungen bei einer Änderung des Betriebszustandes der Hochtemperatur-Batterie 5 bzw. des Hochtemperatur-Elektrolyseurs 5 vorteilhafte Rezirkulation der Heißluft erfolgen. Vor allem bei Änderungen des Betriebszustandes welche eine gleichzeitige Änderung des Massenstroms wie auch der thermischen Wärmeleistung erfordern, kann so vorteilhaft der der Hochtemperatur-Batterie 5 wie dem Hochtemperatur-Elektrolyseur 5 zugeführte Luftstrom konditioniert werden.

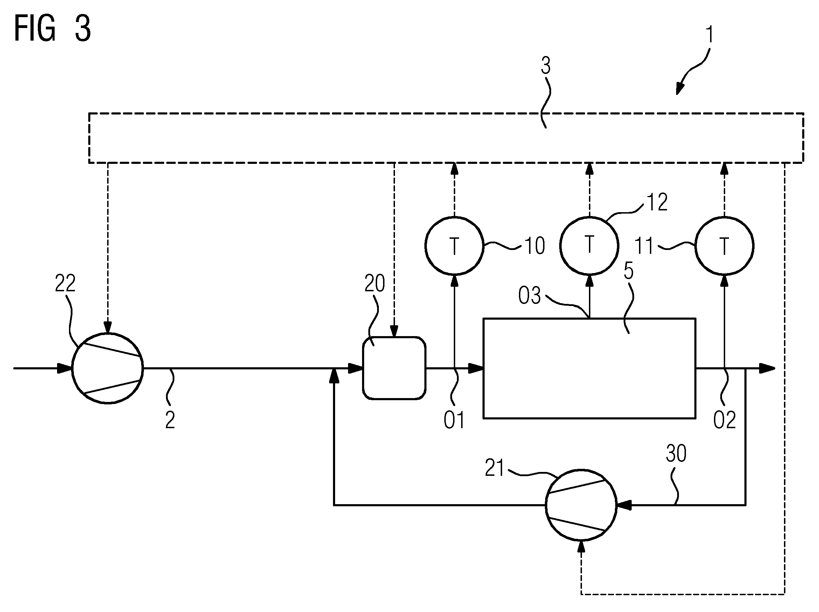

FIG 3 zeigt eine weitere Ausführungsform der Erfindung, welche sich von der in FIG 2 dargestellten Ausführungsform lediglich dahingehend unterscheidet, dass die Regeleinheit 3 drei Temperatursonden 10, 11, 12 aufweist, die an unterschiedlichen Orten des Luftleitungssystems 2 Temperaturmessungen vornehmen. Hierbei wird wie in der Ausführungsform gemäß FIG 2 sowohl stromaufwärts in Bezug auf die Hochtemperatur-Batterie 5 bzw. den Hochtemperatur-Elektrolyseur 5 an einem Ort O1 mittels einer ersten Temperatursonde 10 ein Temperaturwert erfasst. Zusätzlich wird ein zweiter Temperaturwert an einem zweiten Ort 02 stromabwärts in Bezug auf die Hochtemperatur-Batterie 5 bzw. den Hochtemperatur-Elektrolyseur 5 mittels einer zweiten Temperatursonde 11 erfasst. Zusätzlich wird auch noch an einem dritten Ort 03 ein Temperaturwert erfasst, welcher mittels einer dritten Temperatursonde 12 aufgenommen wird. Der dritte Ort 03 ist in der Hochtemperatur-Batterie 5 bzw. in dem Hochtemperatur-Elektrolyseur 5 angeordnet. Hierbei kann der dritte Ort 03, wie ausführungsgemäß vorgesehen, in dem Luftleitungssystem 2 angeordnet sein. Ebenso ist jedoch grundsätzlich auch möglich, an anderen Orten der Hochtemperatur-Batterie 5 bzw. des Hochtemperatur-Elektrolyseurs 5 außerhalb des Luftleitungssystems 2 Temperaturwerte zu erfassen.

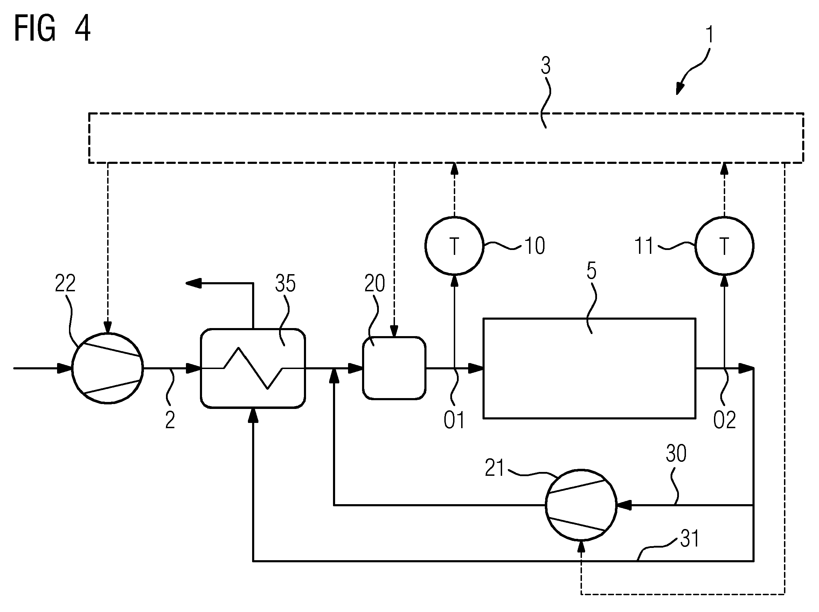

FIG 4 zeigt eine weitere Ausführungsform der Erfindung, die sich von der in FIG 2 gezeigten Ausführungsform lediglich dahingehend unterscheidet, dass eine zweite Rückführleitung 31 vorgesehen ist. Die zweite Rückführleitung 31 ist als Zweigleitung der ersten Rückführleitung 30 ausgebildet. Die zweite Rückführleitung 31 führt einen bestimmungsgemäßen Anteil an zurückgeführter Heißluft einem Wärmetauscher 35 zu, der in dem Luftleitungssystem zwischen der ersten Konditioniereinheit 20 und der dritten Konditioniereinheit 22 verschaltet ist. Der Wärmetauscher 35 ist geeignet, die in dem Luftleitungssystem 2 befindliche Luft thermisch zu konditionieren. Während also die erste Rückführleitung 30 sowohl eine thermische Konditionierung wie auch eine Konditionierung hinsichtlich des Massenstroms des in dem Luftleitungssystem 2 geführten Luftstroms ermöglicht, erlaubt die zweite Rückführleitung 31 lediglich eine thermische Konditionierung. Ausführungsgemäß ist es möglich, sowohl in der ersten Rückführleitung 30 wie auch in der zweiten Rückführleitung 31 geeignete Stelleinrichtungen, bspw. Ventile, vorzusehen. Ebenso ist es möglich, in der zweiten Rückführleitung 31 eine weitere vierte Konditioniereinheit (vorliegend nicht gezeigt) zu verschalten. Diese vierte Konditioniereinheit kann als Strömungsgenerator ausgebildet sein.

Weitere Ausführungsformen ergeben sich aus den Unteransprüchen.

## Patentansprüche

1. Regelsystem (1) zur Temperaturregelung einer mit Heißluft über ein Luftleitungssystem (2) versorgten Hochtemperaturbatterie (5) bzw. eines mit Heißluft über ein Luftleitungssystem (2) versorgten Hochtemperaturelektrolyseurs (5), welches wenigstens zwei Temperatursonden (10, 11) aufweist, die dazu ausgebildet sind, die Temperatur an zwei unterschiedlichen Orten (O1, O2) des Luftleitungssystems (2) zu erfassen, sowie wenigstens eine in Bezug auf die Hochtemperaturbatterie (5) bzw. auf den Hochtemperaturelektrolyseur (5) stromaufwärts in das Luftleitungssystem (2) verschaltete erste Konditioniereinheit (20) zur physikalischen Konditionierung der Luft, sowie eine Rückführleitung (30), welche aus der Hochtemperaturbatterie (5) bzw. aus dem Hochtemperaturelektrolyseur (5) ausgetretene Heißluft zu einem Ort des Luftleitungssystems (2) zurückführt und in dieses wieder einspeist, welcher Ort stromaufwärts in Bezug auf die Hochtemperaturbatterie (5) bzw. auf den Hochtemperaturelektrolyseur (5) angeordnet ist, wobei das Regelsystem (1) die erste Konditioniereinheit (20) in Abhängigkeit der durch die Temperatursonden (10, 11) erfassten Temperaturen regelt.

2. Regelsystem gemäß Anspruch 1,
**dadurch gekennzeichnet**, d**ass** das Regelsystem (1) weiterhin eine in die Rückführleitung (30) verschaltete zweite Konditioniereinheit (21) aufweist, die als Strömungsgenerator ausgebildet ist, und die dazu geeignet ist, die sich in der Rückführleitung (30) befindende Heißluft mit einer Strömung zu beaufschlagen, wobei das Regelsystem (1) diese zweite Konditioniereinheit (21) auch in Abhängigkeit der durch die Temperatursonden (10, 11) erfassten Temperaturen regelt.

3. Regelsystem gemäß einem der vorher gehenden Ansprüche,
**dadurch gekennzeichnet**, d**ass** eine erste Temperatursonde (10) an dem Luftleitungssystem (2) an einem ersten Ort (O1) stromaufwärts vor der Hochtemperaturbatterie (5) bzw. vor dem Hochtemperaturelektrolyseur (5) vorgesehen ist, und eine andere zweite Temperatursonde (11) an dem Luftleitungssystem (2) an einem zweiten Ort (02) stromabwärts nach der Hochtemperaturbatterie (5) bzw. nach dem Hochtemperaturelektrolyseur (5) vorgesehen ist.

4. Regelsystem gemäß einem der vorher gehenden Ansprüche,
**dadurch gekennzeichnet**, d**ass** eine erste Temperatursonde (10) an dem Luftleitungssystem (2) an einem ersten Ort (O1) stromaufwärts vor der Hochtemperaturbatterie (5) bzw. vor dem Hochtemperaturelektrolyseur (5) vorgesehen ist, und eine andere zweite Temperatursonde (11) in der Hochtemperaturbatterie (5) bzw. in dem Hochtemperaturelektrolyseur (5) vorgesehen ist.

5. Regelsystem gemäß einem der vorher gehenden Ansprüche,
**dadurch gekennzeichnet**, d**ass** wenigstens drei Temperatursonden (10, 11, 12) vorgesehen sind, wobei eine erste Temperatursonde (10) an dem Luftleitungssystem (2) an einem ersten Ort (O1) stromaufwärts vor der Hochtemperaturbatterie (5) bzw. vor dem Hochtemperaturelektrolyseur (5) vorgesehen ist, eine zweite Temperatursonde (11) an dem Luftleitungssystem (2) an einem zweiten Ort (02) stromabwärts nach der Hochtemperaturbatterie (5) bzw. nach dem Hochtemperaturelektrolyseur (5) vorgesehen ist, und eine dritte Temperatursonde (12) in der Hochtemperaturbatterie (5) bzw. in dem Hochtemperaturelektrolyseur (5) vorgesehen ist.

6. Regelsystem gemäß einem der vorher gehenden Ansprüche,
**dadurch gekennzeichnet**, d**ass** die Konditioniereinheit (20) als Heizvorrichtung ausgebildet ist, die dazu geeignet ist, der in dem Luftleitungssystem (2) befindlichen Luft Wärme zuzuführen.

7. Regelsystem gemäß einem der vorher gehenden Ansprüche,
**dadurch gekennzeichnet**, d**ass** die Konditioniereinheit (20) als Strömungsgenerator ausgebildet ist, der dazu geeignet ist, die sich in dem Luftleitungssystem (2) befindende Luft mit einer Strömung zu beaufschlagen.

8. Regelsystem gemäß einem der vorher gehenden Ansprüche,
**dadurch gekennzeichnet**, d**ass** das Regelsystem (1) wenigstens zwei in Bezug auf die Hochtemperaturbatterie (5) bzw. auf den Hochtemperaturelektrolyseur (5) stromaufwärts in das Luftleitungssystem (2) verschaltete Konditioniereinheiten (20, 21) aufweist, wobei eine Konditioniereinheit (20) als Heizvorrichtung ausgebildet ist, die dazu geeignet ist, der in dem Luftleitungssystem (2) befindlichen Luft Wärme zuzuführen, und eine Konditioniereinheit (20) als Strömungsgenerator ausgebildet ist, der dazu geeignet ist, die sich in dem Luftleitungssystem (2) befindende Luft mit einer Strömung zu beaufschlagen, wobei das Regelsystem (1) die beiden Konditioniereinheiten (20, 21) in Abhängigkeit des durch die Temperatursonden (10, 11) erfassten Temperaturunterschieds regelt.

9. Regelsystem gemäß Anspruch 8,
**dadurch gekennzeichnet**, d**ass** die zwei Konditioniereinheiten (20, 21) als ein Bauteil ausgebildet sind, und insbesondere in dem Bauteil eine Reihenschaltung aufweisen.

10. Regelsystem gemäß einem der vorher gehenden Ansprüche,
**dadurch gekennzeichnet**, d**ass** das Regelsystem (1) weiterhin eine zweite Rückführleitung (31) aufweist, welche aus der Hochtemperaturbatterie (5) bzw. aus dem Hochtemperaturelektrolyseur (5) ausgetretene Heißluft zu einem Ort des Luftleitungssystems (2) zurückführt, welcher Ort stromaufwärts in Bezug Hochtemperaturbatterie (5) bzw. auf den Hochtemperaturelektrolyseur (5) angeordnet ist.

11. Regelsystem gemäß Anspruch 10,
**dadurch gekennzeichnet**, d**ass** die zweite Rückführleitung (31) die aus der Hochtemperatur-batterie (5) bzw. aus dem Hochtemperaturelektrolyseur (5) austretende Heißluft zu einem Wärmetauscher (35) führt, welcher dazu ausgebildet ist, die Heißluft in dem Luftleitungssystems (2) zu erwärmen, bevor sie der Hochtemperaturbatterie (5) bzw. dem Hochtemperaturelektrolyseur (5) zugeführt wird.

12. Regelsystem gemäß Anspruch 10 oder 11,
**dadurch gekennzeichnet**, d**ass** der Wärmetauscher (35) in Bezug auf die erste Konditioniereinheit (20) stromaufwärts in dem Luftleitungssystems (2) verschaltet ist.

## Claims

1. Control system (1) for temperature control of a high-temperature battery (5) which is supplied with hot air via an air piping system (2) or of a high-temperature electrolyzer (5) which is supplied with hot air via an air piping system (2), which has at least two temperature probes (10, 11) which are designed for detecting the temperature at two different points (01, 02) of the air piping system (2), and also at least one first conditioning unit (20), for the physical conditioning of the air, which is connected into the air piping system (2) upstream with regard to the high-temperature battery (5) or to the high-temperature electrolyzer (5), and also a feedback pipe (30) which feeds back hot air discharged from the high-temperature battery (5) or from the high-temperature electrolyzer (5) to a point of the air piping system (2) and feeds the hot air into this again, which point is arranged upstream with regard to the high-temperature battery (5) or to the high-temperature electrolyzer (5), wherein the control system (1) controls the first conditioning unit (20) in dependence upon the temperatures which are detected by the temperature probes (10, 11).

2. Control system according to Claim 1,
**characterized in that**
the control system (1) also has a second conditioning unit (21), connected into the feedback pipe (30), which is designed as a flow generator and is suitable for applying a flow to the hot air which is present in the feedback pipe (30), wherein the control system (1) also controls this second conditioning unit (21) in dependence upon the temperatures which are detected by the temperature probes (10, 11).

3. Control system according to one of the preceding claims,
**characterized in that**
a first temperature probe (10) is provided in the air piping system (2) at a first point (01) upstream of the high-temperature battery (5) or upstream of the high-temperature electrolyzer (5), and another, second temperature probe (11) is provided in the air piping system (2) at a second point (02) downstream of the high-temperature battery (5) or downstream of the high-temperature electrolyzer (5).

4. Control system according to one of the preceding claims,
**characterized in that**
a first temperature probe (10) is provided in the air piping system (2) at a first point (01) upstream of the high-temperature battery (5) or upstream of the high-temperature electrolyzer (5), and another, second temperature probe (11) is provided in the high-temperature battery (5) or in the high-temperature electrolyzer (5).

5. Control system according to one of the preceding claims,
**characterized in that**
provision is made for at least three temperature probes (10, 11, 12), wherein a first temperature probe (10) is provided in the air piping system (2) at a first point (01) upstream of the high-temperature battery 5 or of the high-temperature electrolyzer (5), a second temperature probe (11) is provided in the air piping system (2) at a second point (02) downstream of the high-temperature battery (5) or downstream of the high-temperature electrolyzer (5), and a third temperature probe (12) is provided in the high-temperature battery (5) or in the high-temperature electrolyzer (5).

6. Control system according to one of the preceding claims,
**characterized in that**
the conditioning unit (20) is designed as a heating device which is suitable for supplying heat to the air which is present in the air piping system (2).

7. Control system according to one of the preceding claims,
**characterized in that**
the conditioning unit (20) is designed as a flow generator which is suitable for applying a flow to the air which is present in the air piping system (2).

8. Control system according to one of the preceding claims,
**characterized in that**
the control system (1) has at least two conditioning units (20, 21) which are connected into the air piping system (2) upstream with regard to the high-temperature battery (5) or to the high-temperature electrolyzer (5), wherein one conditioning unit (20) is designed as a heating device which is suitable for feeding heat to the air which is present in the air piping system (2), and one conditioning unit (21) is designed as a flow generator which is suitable for applying a flow to the air which is present in the air piping system (2), wherein the control system (1) controls the two conditioning units (20, 21) in dependence upon the temperature difference which is detected by the temperature probes (10, 11).

9. Control system according to Claim 8,
**characterized in that**
the two conditioning units (20, 21) are designed as one component, and especially have a series connection in the component.

10. Control system according to one of the preceding claims,
**characterized in that**
the control system (1) also has a second feedback pipe (31) which feeds back hot air discharged from the high-temperature battery (5) or from the high-temperature electrolyzer (5) to a point of the air piping system (2), which point is arranged upstream with regard to the high-temperature battery (5) or to the high-temperature electrolyzer (5).

11. Control system according to Claim 10, **characterized in that**
the second feedback pipe (31) conducts the hot air discharging from the high-temperature battery (5) or from the high-temperature electrolyzer (5) to a heat exchanger (35) which is designed for heating the hot air in the air piping system (2) before it is fed to the high-temperature battery (5) or to the high-temperature electrolyzer (5).

12. Control system according to Claim 10 or 11,
**characterized in that**
the heat exchanger (35) is connected into the air piping system (2) upstream with regard to first conditioning unit (20).

## Revendications

1. Système ( 1 ) de régulation pour réguler la température d'une batterie ( 5 ) à haute température alimentée en air chaud par un système ( 2 ) de conduite d'air ou d'un électrolyseur ( 5 ) à haute température alimenté en air chaud par un système ( 2 ) de conduite d'air, lequel a au moins deux sondes ( 10, 11 ) de température qui sont constituées pour relever la température en deux emplacements ( O1, O2 ) différents du système ( 2 ) de conduite d'air, ainsi qu'au moins une première unité ( 20 ) de traitement physique de l'air montée par rapport à la batterie ( 5 ) à haute température à l'électrolyseur ( 5 ) à haute température en amont dans le système ( 2 ) de conduite d'air, ainsi qu'un conduit ( 30 ) de retour qui retourne de l'air chaud sortant de la batterie ( 5 ) à haute température ou de l'électrolyseur ( 5 ) à haute température à un emplacement du système ( 5 ) de conduite d'air et l'y réinjecte, lequel emplacement est en amont de la batterie ( 5 ) à haute température ou de l'électrolyseur ( 5 ) à haute température, le système ( 1 ) de régulation régulant la première unité ( 20 ) de traitement en fonction des températures relevées par les sondes ( 10, 11 ) de température.

2. Système de régulation suivant la revendication 1,
**caractérisé en ce que**
le système ( 1 ) de régulation a en outre une deuxième unité ( 21 ) de traitement, qui est montée dans le conduit ( 30 ) de retour, qui est constituée en génératrice de courant et qui est propre à alimenter l'air chaud se trouvant dans le conduit ( 30 ) de retour en un courant, le système ( 1 ) de régulation régulant cette deuxième unité ( 21 ) de traitement également en fonction des températures relevées par les sondes ( 10, 11 ) de température.

3. Système de régulation suivant l'une des revendications précédentes,
**caractérisé en ce qu'**
une première sonde ( 10 ) de température est prévue sur le système ( 2 ) de conduite d'air en un premier emplacement ( O1 ) en amont de la batterie ( 5 ) à haute température ou de l'électrolyseur ( 5 ) à haute température, et une autre deuxième sonde ( 11 ) de température est prévue sur le système ( 2 ) de conduite d'air en un deuxième emplacement ( O2 ) en aval de la batterie ( 5 ) à haute température ou de l'électrolyseur ( 5 ) à haute température.

4. Système de régulation suivant l'une des revendications précédentes,
**caractérisé en ce qu'**
une première sonde ( 10 ) de température est prévue sur le système ( 2 ) de conduite d'air en un premier emplacement ( O1 ) en amont de la batterie ( 5 ) à haute température ou de l'électrolyseur ( 5 ) à haute température et une autre deuxième sonde ( 11 ) de température est prévue dans la batterie ( 5 ) à haute température ou dans l'électrolyseur ( 5 ) à haute température.

5. Système de régulation suivant l'une des revendications précédentes,
**caractérisé en ce qu'**
il est prévu au moins trois sondes ( 10, 11, 12 ) de température, une première sonde ( 10 ) de température étant prévue sur le système ( 2 ) de conduite d'air en un premier emplacement ( O1 ) en amont de la batterie ( 5 ) à haute température ou de l'électrolyseur ( 5 ) à haute température, une deuxième sonde ( 11 ) de température étant prévue sur le système ( 2 ) de conduite d' air en un deuxième emplacement ( O2 ) en aval de la batterie ( 5 ) à haute température ou de l'électrolyseur ( 5 ) à haute température et une troisième sonde ( 12 ) de température est prévue dans la batterie ( 5 ) à haute température ou dans l'électrolyseur ( 5 ) à haute température.

6. Système de régulation suivant l'une des revendications précédentes,
**caractérisé en ce que**
l'unité ( 20 ) de traitement est constituée sous la forme d' un dispositif de chauffage propre à apporter de la chaleur à de l'air se trouvant dans le système ( 2 ) de conduite d'air.

7. Système de régulation suivant l'une des revendications précédentes,
**caractérisé en ce que**
l'unité ( 20 ) de traitement est constituée en génératrice de courant propre à alimenter en un courant d'air se trouvant dans le système de conduite d'air.

8. Système de régulation suivant l'une des revendications précédentes,
**caractérisé en ce que**
le système ( 1 ) de régulation a au moins deux unités ( 20, 21 ) de traitement montées par rapport à la batterie ( 5 ) à haute température ou à l'électrolyseur ( 5 ) à haute température en amont dans le système ( 2 ) de conduite d'air une unité ( 20 ) de traitement étant constituée en dispositif de chauffage propre à apporter de la chaleur à l'air se trouvant dans le système ( 2 ) de conduite d' air et une unité ( 20 ) de traitement étant constituée en génératrice de courant propre à alimenter en un courant l'air se trouvant dans le système ( 2 ) de conduite d'air, le système ( 1 ) de régulation régulant les deux unités ( 20, 21 ) de traitement en fonction de la différence de température relevée par les sondes ( 10, 11 ) de température.

9. Système de régulation suivant la revendication 8,
**caractérisé en ce que**
les deux unités ( 20, 21 ) de traitement sont constituées sous la forme d' un composant et ont notamment un circuit série dans le composant.

10. Système de régulation suivant l'une des revendications précédentes,
**caractérisé en ce que**
le système ( 1 ) de régulation a en outre un deuxième conduit ( 31 ) de retour qui retourne de l'air chaud sorti de la batterie ( 5 ) à haute température ou de l'électrolyseur ( 5 ) à haute température à un emplacement du système ( 2 ) de conduite d' air, lequel emplacement est en amont de la batterie ( 5 ) à haute température ou de l'électrolyseur ( 5 ) à haute température.

11. Système de régulation suivant la revendication 10,
**caractérisé en ce que**
le deuxième conduit ( 31 ) de retour conduit l'air chaud sortant de la batterie ( 5 ) à haute température ou de l'électrolyseur ( 5 ) à haute température à un échangeur de chaleur ( 35 ) constitué pour réchauffer l'air chaud dans le système ( 2 ) de conduite d' air avant de l'envoyer à la batterie ( 5 ) à haute température ou à l'électrolyseur ( 5 ) à haute température.

12. Système de régulation suivant la revendication 10 ou 11,
**caractérisé en ce que**
l'échangeur de chaleur ( 35 ) est monté dans le système ( 2 ) de conduite d' air en amont de la première unité ( 20 ) de traitement.
